(19) Europäisches Patentamt
European Patent Office
Office européen des brevets

(11) Veröffentlichungsnummer: 0 169 808
A2

(12) # EUROPÄISCHE PATENTANMELDUNG

(21) Anmeldenummer: 85810328.6

(22) Anmeldetag: 18.07.85

(51) Int. Cl.[4]: G 03 C 5/52
//C09B35/38, C09B35/56,
C09B35/64

(30) Priorität: 24.07.84 CH 3577/84

(43) Veröffentlichungstag der Anmeldung:
29.01.86 Patentblatt 86/5

(84) Benannte Vertragsstaaten:
BE CH DE FR GB IT LI NL

(71) Anmelder: CIBA-GEIGY AG
Klybeckstrasse 141
CH-4002 Basel(CH)

(72) Erfinder: Rohr, Thomas-Markus, Dr.
Ch. Forêt 15
CH-1723 Marly(CH)

(72) Erfinder: Kuhn, Jakob, Dr.
Route des Mouettes 6
CH-1723 Marly(CH)

(54) UV-absorbierende Verbindungen, Verfahren zu ihrer Herstellung und ihre Verwendung als Bildfarbstoffe in photograhischen Materialien für das Silberfarbbleichverfahren.

(57) Verbindungen der formel

(I) $(B-L\frac{}{}_{m}A\frac{}{}L'-B')_n$ ,

worin A der Rest eines Bis- oder Trisazofarbstoffs ist, L und L' einen organischen Rest und B und B' einen cyclischen organischen Rest bedeuten, und mindestens einer der Reste B und B' spektrale Absorption im UV-Bereich aufweist, und einer der Reste B und B' verschieden von 2,4-Dihydroxyphenyl ist, m 1 oder 2 und n 0, 1 oder 2 ist.

Die Verbindungen eignen sich als Bildfarbstoffe in photographischen Silberfarbbleichmaterialien.

EP 0 169 808 A2

CIBA-GEIGY AG
Basel (Schweiz)

8-15010/=/TEL 239

# UV-absorbierende Verbindungen, Verfahren zu ihrer Herstellung und ihre Verwendung als Bildfarbstoffe in photographischen Materialien für das Silberfarbbleichverfahren

Die vorliegende Erfindung betrifft UV-absorbierende Verbindungen, Verfahren zu ihrer Herstellung und ihre Verwendung als Bildfarbstoffe in photographischen Materialien für das Silberfarbbleichverfahren.

UV-absorbierende Verbindungen, die als Bildfarbstoffe in photographischen Materialien für das Silberfarbbleichverfahren verwendet werden können, ermöglichen den Einsatz dieser Materialien überall dort, wo die Belichtung mit UV-Licht oder Licht mit hohem UV-Anteil eine Rolle spielt. Beispielsweise erfolgt die bildmässige Belichtung von Diazotypiematerialien mit Quecksilberdampflampen, deren Licht einen hohen und intensiven UV-Anteil besitzt. Wenn es sich bei der Vorlage, die auf solche Diazotypiematerialien übertragen werden soll, um eine aus Silberfarbbleichmaterial hergestellte Vorlage handelt, so sollten die in diesem Silberfarbbleichmaterial enthaltenen Bildfarbstoffe also nicht nur im sichtbaren sondern auch im ultravioletten Bereich eine hohe Absorption aufweisen. Damit die Bilder auch visuell beurteilt werden können, ist es von Vorteil, wenn die Bildfarbstoffe dunkel sind, d.h. in einem möglichst grossen Teil des sichtbaren Spektralbereichs absorbieren.

Aufgabe der vorliegenden Erfindung ist somit die Bereitstellung von Verbindungen mit spektraler Absorption im UV-Bereich wie auch im praktisch gesamten Bereich des sichtbaren Spektrums und die sich zur Verwendung in photographischem Silberfarbbleichmaterial eignen.

Es wurde nun gefunden, dass die Verbindungen der nachstehenden Formel (1) diese Anforderungen weitgehend erfüllen.

Gegenstand der vorliegenden Erfindung sind daher Verbindungen der Formel

(1) $(B\text{-}L)_m\!-\!A\!-\!(L'\text{-}B')_n$ ,

worin A der Rest eines Bis- oder Trisazofarbstoffes ist, L und L' gleich oder voneinander verschieden sind und ein Brückenglied bedeuten, B und B' gleich oder voneinander verschieden sind und einen aromatischen Rest bedeuten, wobei mindestens einer der Reste B und B' spektrale Absorption im UV-Bereich aufweist, und einer der Reste B und B' verschieden von 2,4-Dihydroxyphenyl ist, und m 1 oder 2 und n 0, 1 oder 2 ist.

Gegenstand der vorliegenden Erfindung sind ferner die Herstellung der erfindungsgemässen Verbindungen der Formel (1), ihre Verwendung als Bildfarbstoffe in photographischen Silberfarbbleichmaterialien, die diese Bildfarbstoffe enthaltenden photographischen Silberfarbbleichmaterialien, insbesondere monochrome Silberfarbbleichmaterialien, und die Verwendung der aus solchen Materialien hergestellten Bilder als Vorlage bei der Belichtung von Diazotypiematerial.

In den Verbindungen der Formel (1) bedeutet A den Rest (Chromophor) eines Bis- oder Trisazofarbstoffs. Vorzugsweise lässt sich A durch die Formeln

(2) - E - N = N - D - N = N - E',

(3) - E - N = N - D - N = N - E' - ,

(4) - E - N = N - D - N = N - D' - N = N - E' oder

(5) - E - N = N - D - N = N - D' - N = N - E' -

wiedergeben. Die Reste E, E', D und D' können gleich oder verschieden sein und stellen vorzugsweise aromatische Reste dar. Geeignete aromatische Reste sind z.B. solche der Formel

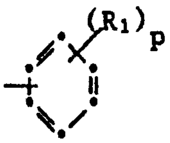 , 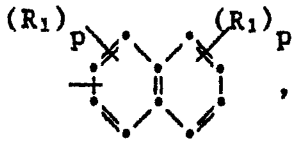 , 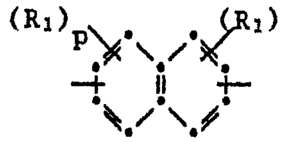 ,

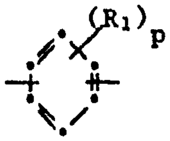 , 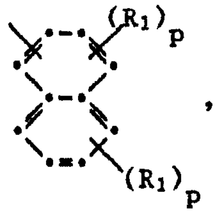 , 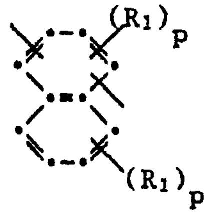 ,

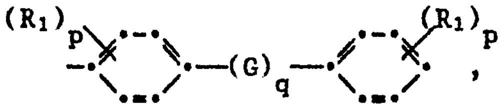 , 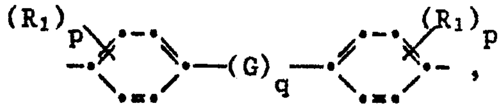 ,

worin $R_1$ Wasserstoff oder Alkyl, Alkoxy, Alkylthio, Alkyl- oder Dialkylamino, wobei die genannten Reste jeweils 1 bis 4 Kohlenstoffatome enthalten können, ferner Amino, Aryl wie z.B. Phenyl, Halogen, insbesondere Fluor, Chlor oder Brom, Nitro, Cyano, Hydroxyl, Mercapto, Acylamido ($C_{1-4}$Alkyl-CONH-), Sulfo, Amidosulfonyl ($H_2N-SO_2-$, $(C_{1-4})Alkyl_2N-SO_2)-$, Carboxyl oder Amidocarbonyl ($H_2N-CO-$, $(C_{1-4}-Alkyl)_2N-CO-$) ist. G ist ein gerad-oder verzweigtkettiger oder heterocyclischer, organischer, zweiwertiger Rest, ein Heteroatom, wie z.B. -O- oder -S-, oder eine Gruppe der Formel

$-SO_2-$, -NH-, -N=N- oder $-\underset{\substack{\downarrow \\ O}}{N}=N-$.

Geeignete heterocyclische zweiwertige organische Reste sind vorzugsweise 5- oder 6-gliedrige, ungesättigte Reste, die als Heteroatome Stickstoff, Sauerstoff und/oder Schwefelatome enthalten, wie z.B. Pyrroldiyl, Furandiyl, Thiophendiyl, Thiophendioxiddiyl, Imidazoldiyl, Thiazoldiyl, Oxazoldiyl, Oxadiazoldiyl, Thiadiazoldiyl und Triazoldiyl, sowie Pyridindiyl, Pyrazindiyl, Pyrandiyl, Triazindiyl, Thiopyrandiyl und Oxazindiyl.

Als gerad- oder verzweigtkettige organische Reste G lassen sich Alkylen wie z.B. Methylen, Aethylen, n-Propylen, sek.Propylen oder Isopropylen

$$(CH_3-\overset{|}{\underset{|}{C}}-CH_3 \quad \text{oder} \quad -CH_2-\overset{|}{C}H-CH_3),$$

Alkenylen, vorzugsweise Aethenylen oder Butadienylen, ferner -O-, -S-, $-SO_2-$, $-CH_2SO_2-$, -NH-, -N-Alkyl mit vorzugsweise 1 bis 4 Kohlenstoffatomen, $-CH_2NH-$, -NHCO-, $-NHSO_2-$, -NHCONH-, -NHCSNH-, -N=N- oder

$$-\underset{\downarrow \atop O}{N}=N-$$

aufzählen. Für q kommen die Werte 0 oder 1 in Frage.

Die genannten cyclischen Reste E, E', D und D' können 1 bis 3 Substituenten $R_1$ enthalten. Sind 2 oder 3 Substituenten $R_1$ vorhanden, so können diese gleich oder voneinander verschieden sein.

Die Brückenglieder L und L' können gleich oder voneinander verschieden sein. Vorzugsweise stellen sie Reste wie Alkylen mit 1 bis 4 Kohlenstoffatomen, Arylen wie Phenylen und Naphthylen, Acylamid (-CONH-), Carboxylen (-COO-), -O-, -S-, -NH-, $-SO_2-$ oder -N=N- dar.

Die Reste B und B', die gleich (Ausnahme: B und B' sind gleichzeitig 2,4-Dihydroxyphenyl) oder voneinander verschieden sind, bedeuten einen aromatischen, organischen Rest, wobei mindestens einer der Reste B und B' sehr ausgeprägte UV-absorbierende Eigenschaften besitzt. B und B' können z.B. Phenyl, Naphthyl oder einen der für G genannten aromatischen 5- oder 6-gliedrigen Heterocyclen bedeuten, ferner ein Derivat des Benzophenons, Benzthiazols, Benztriazols, Chinoxalins, Triazins, Phenylsalicylats, 2,4-Dihydroxyphenyl oder Pyrons, die als Rest B oder B' mit sehr hohem Absorptionsvermögen im ultravioletten Spektralbereich betrachtet werden. Die aromatischen

organischen Reste B und B' können die in der Farbstoffchemie üblichen Substituenten enthalten. Geeignete Substituenten stellen die in der Definition von $R_1$ aufgezählten Reste dar.

Bevorzugte Verbindungen der Formel (1) sind solche, worin A ein Rest der Formel

$$- E - N = N - D - N = N - E',$$
$$- E - N = N - D - N = N - E' - ,$$
$$- E - N = N - D - N = N - D' - N = N - E' \quad \text{oder}$$
$$- E - N = N - D - N = N - D' - N = N - E' -$$

ist, worin E, E', D und D' unabhängig voneinander ein Rest der Formel

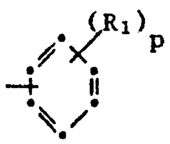 , 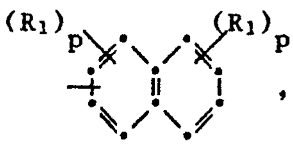 , 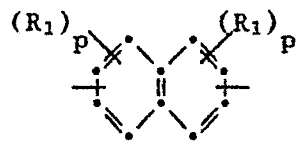 ,

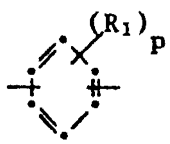 , 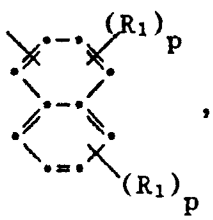 , 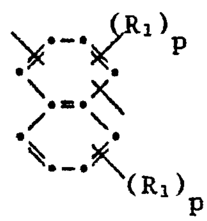 ,

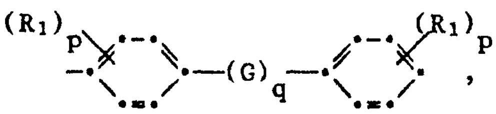 , 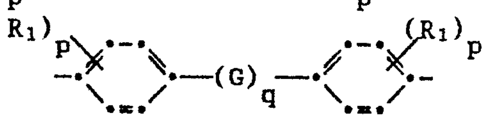

sind, worin $R_1$ Wasserstoff, Alkyl, Alkoxy, Alkylthio, Alkyl- oder Dialkylamino, Amino, Aryl, Halogen, Nitro, Cyano, Hydroxyl, Mercapto, Acylamido, Sulfo, Amidosulfonyl, Carboxyl oder Amidocarbonyl, p 0, 1, 2 oder 3, G ein gerad- oder verzweigtkettiger oder heterocyclischer organischer Rest oder -O-, -S-, $-SO_2-$, -NH-, -N=N- oder

$$- \underset{\downarrow \atop O}{N} = N -$$

und q 0 oder 1 ist.

Vorzugsweise ist in diesen Verbindungen $R_1$ Alkyl, Alkoxy, Alkylthio, Alkyl- oder Dialkylamino mit je 1 bis 4 Kohlenstoffatomen, Phenyl, Amino, Chlor, Nitro, Cyano, Hydroxyl, Mercapto, Acylamido, Sulfo, Amidosulfonyl, Carboxyl oder Amidocarbonyl oder insbesondere Alkoxy mit 1 bis 4 Kohlenstoffatomen, Amino, Hydroxyl oder Sulfo.

In besonders geeigneten Verbindungen ist G Alkylen, Alkenylen, Alkylsulfonylen oder Alkylimino mit je 1 bis 4 Kohlenstoffatomen, -NHCO-, $-NHSO_2-$, -NHCONH-, -NHCSNH-, -O-, -S-, $-SO_2-$, -NH-, -N=N- oder

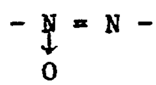

oder vorzugsweise Alkylen oder Alkylimino mit je 1 bis 4 Kohlenstoffatomen, -NH- oder -N=N-.

In einer weiteren Gruppe bevorzugter Verbindungen ist G ein Rest der Formel

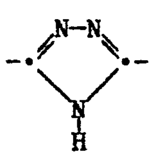 , 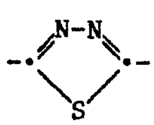 , 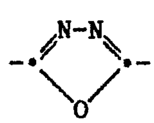 , 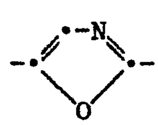 ,

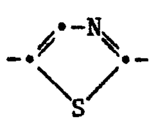 , 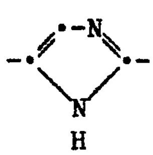 , 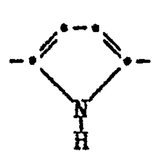 , 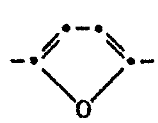 ,

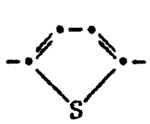 oder 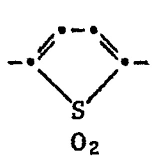

Der Chromophor A entspricht in besonders bevorzugten Verbindungen der Formel

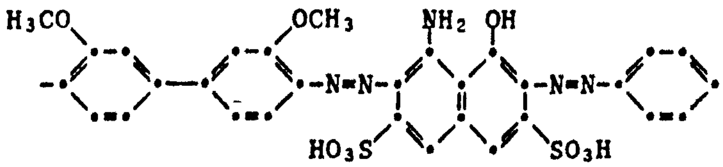

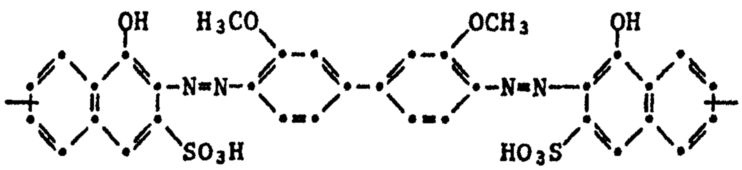 ,

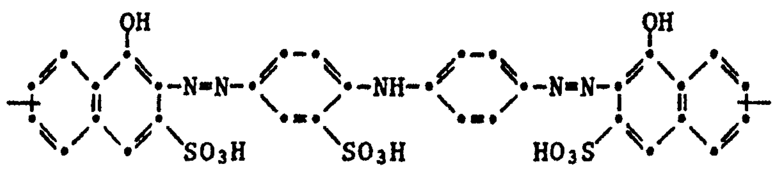 ,

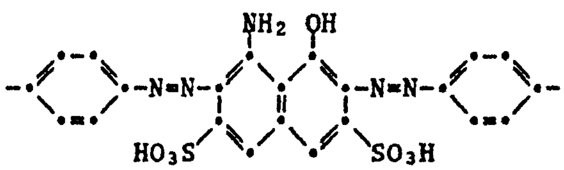 oder

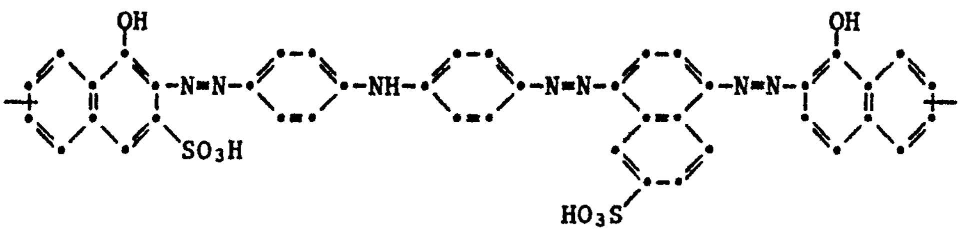

In geeigneten Verbindungen der Formel (1) sind L und L' unabhängig voneinander Alkylen mit 1 bis 4 Kohlenstoffatomen, Phenylen, Naphthylen, -O-, -S-, -NH-, $-SO_2-$, -N=N-, -CO-NH- oder

$$-\overset{O}{\overset{\|}{C}}-O-.$$

Bevorzugte Verbindungen der Formel (1) weisen Reste B und B' auf, die unabhängig voneinander Phenyl, Naphthyl, Pyridinyl, Pyrazinyl, Thiophenyl, Furanyl, Pyrrolyl, Thiazolyl, Benzophenyl, Benzthiazolyl, Benztriazolyl, Triazinyl, Chinoxalinyl, Phenylsalicyl, Resorcinyl oder Pyronyl, insbesondere unabhängig voneinander Benzophenyl, Benztriazolyl, Benzthiazolyl, Chinoxalinyl oder 2,4-Dihydroxyphenyl

bedeuten. 2,4-Dihydroxyphenyl ist ein besonders bevorzugter Rest B bzw. B'.

Besonders bevorzugt sind solche Verbindungen, worin B und B' unabhängig voneinander ein Rest der Formel

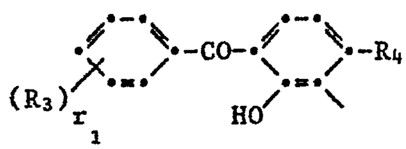 , 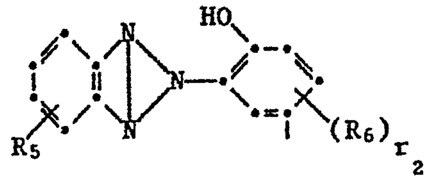 ,

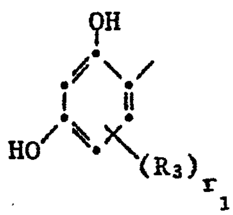 , 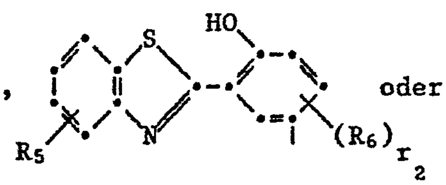 oder 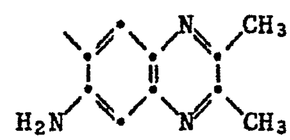

sind, worin $R_3$ Wasserstoff, Hydroxyl, Methoxy, Chlor, Fluor, Carboxyl, Sulfo, $r_1$ 1, 2 oder 3, $R_4$ Hydroxyl, Amino oder Alkoxy, Sulfoalkyloxy oder Acylamino mit je 1 bis 4 Kohlenstoffatomen, $R_5$ Wasserstoff, Chlor oder Sulfo, $R_6$ Wasserstoff, Alkyl mit 1 bis 4 Kohlenstoffatomen, Carboxyalkyl mit 1 bis 4 Kohlenstoffatomen oder Amino und $r_2$ 1 oder 2 ist oder vor allem unabhängig voneinander ein Rest der Formel

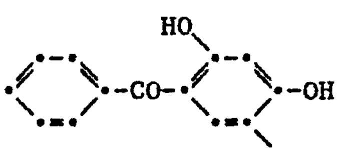 , 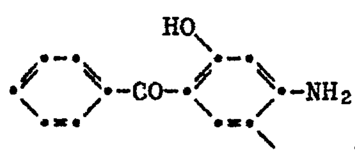 , 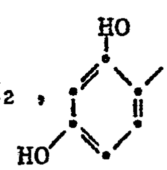 ,

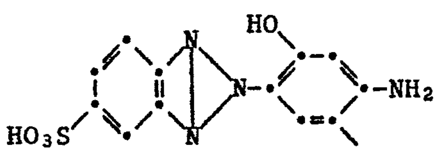 oder 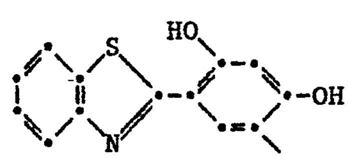

bedeuten.

Die erfindungsgemässen Verbindungen zeichnen sich neben den Absorptionen in grossen Teilen des sichtbaren Spektralbereichs auch durch ein hohes Absorptionsvermögen von ultraviolettem Licht aus. Die molaren Extinktionskoeffizienten dieser Verbindungen bei Wellenlängen unter 400 nm sind verglichen mit den Werten entsprechender Verbindungen ohne UV-absorbierende Gruppen deutlich höher. Ferner weisen die erfindungsgemässen Verbindungen durchweg eine dunkle Farbe auf, z.B. dunkelbraun, -blau oder -grün oder schwarz. Die schwarzen Verbindungen können beispielsweise auch zur Herstellung von Schwarzweissbildern aus Silberfarbbleichmaterial verwendet werden. Alle Verbindungen der Formel (1) können unter den für die Verarbeitung von belichteten Silberfarbbleichmaterialien üblichen Bedingungen gut gebleicht werden.

Die Herstellung der erfindungsgemässen Verbindungen der Formel (1) erfolgt nach üblichen Methoden. Wenn L und gegebenenfalls L' eine Azogruppe bedeuten, wird aus der Verbindung der Formel

(6) $(H_2N)_{m}A(NH_2)_n$

die entsprechende Tetrazoverbindung hergestellt. A, m und n haben die angegebenen Bedeutungen. Diese wird dann durch Kuppeln mit der Verbindung der Formel

(7) B - H bzw. (7a) B' - H

worin B und B' die angegebenen Bedeutungen haben, in die entsprechende Verbindung der Formel

(1a) $(B-N=N)_{m}A(N=N-B')_n$

überführt. Haben L und L' die angegebenen Bedeutungen jedoch mit Ausnahme der Azogruppe, so geht man zweckmässigerweise von der Verbindung der Formel

(8) $(H)_{m}A(H)_n$

aus und setzt diese mit der Verbindung der Formel

(9) B-L-Halogen bzw. (9a) B'-L'-Halogen

zur Verbindung der Formel

(1b) $(B\text{-}L)_m\text{-}A\text{-}(L'\text{-}B')_n$

um.

Die Einarbeitung der erfindungsgemässen Verbindungen sowie auch solcher Verbindungen der Formel (1), worin die Reste B und B' gleichzeitig eine 2,4-Dihydroxyphenylgruppe bedeuten, in photographische Silberfarbbleichmaterialien geschieht wie folgt:

Die genannten Verbindungen werden vorzugsweise als Lösung in Wasser oder in einem mit Wasser mischbaren Lösungsmittel bei Zimmertemperatur oder erhöhter Temperatur zu einer wässrigen Gelatinelösung unter Rühren zugesetzt. Anschliessend wird diese Mischung mit einem Silberhalogenid und/oder andere Materialien zur Erzeugung photographischer Bilder enthaltenden Bindemittel zusammengebracht, auf einer Unterlage in üblicher Weise zu einer Schicht vergossen und gegebenenfalls getrocknet.

Die Lösung dieser Verbindungen kann auch direkt zu einem Silberhalogenid und/oder andere Materialien zur Erzeugung photographischer Bilder enthaltenden Bindemittel zugegeben werden. So ist es z.B. möglich, die Lösung erst unmittelbar vor dem Giessen zuzudosieren. Anstelle des einfachen Rührens können auch die üblichen Verteilungsmethoden mittels Knet- und/oder Scherkräften oder Ultraschall zur Anwendung gelangen. Es ist auch möglich, die erfindungsgemässen Verbindungen nicht als Lösung sondern in fester Form oder als Paste zuzugeben.

Geeignete Silberhalogenidemulsionen können Silberbromid oder Silberjodobromid sowie aber auch Silberchlorid oder Silberchlorobromid oder Silberchlorojodobromid enthalten. Die Silberhalogenidemulsionen können spektral sensibilisiert sein sowie Stabilisatoren und Antischleiermittel enthalten. Solche Silberhalogenidemulsionen sind z.B. in Research Disclosure Nr. 17, 643 (Dezember 1978), Nr. 18, 155 (Mai 1979 und Nr. 22, 534 (Januar 1983) beschrieben. Die Wahl einer speziellen Emulsion wird vor allem durch die für das Material geforderte Empfindlichkeit bestimmt.

Die im erfindungsgemässen photographischen Material als Bindemittel für die als Bildfarbstoff verwendeten Verbindungen der Formel (1), für Silberhalogenid und gegebenenfalls Filterfarbstoffe verwendete Gelatine kann Zusätze wie z.B. Polyvinylalkohol oder Polyvinylpyrrolidon enthalten. Ferner kann ein Teil der Gelatine durch Dispersionen nichtwasserlöslicher, hochmolekularer Stoffe ersetzt werden, z.B. Dispersionspolymerisate aus $\alpha,\beta$-ungesättigten Verbindungen wie Acrylsäureestern, Vinylestern und Vinyläthern, Vinylchlorid sowie Vinylidenchlorid. Die Vernetzung der Gelatine erfolgt vorzugsweise mit den in CH-A-574.980 beschriebenen Triazinderivaten. Es können aber auch andere Härter, wie z.B. Aldehyde, Vinylsulfone, Diimine usw. verwendet werden.

Als Schichtträger für das erfindungsgemäss verwendete Material kommen die üblichen transparenten Materialien wie z.B. solche aus Cellulosetriacetat oder Polyester in Frage.

Vorzugsweise enthält das erfindungsgemässe Material einen transparenten Träger, eine Silberhalogenidemulsionsschicht mit einer Verbindung der Formel (1) und gegebenenfalls eine Schutzschicht. Zusätzlich kann das erfindungsgemässe Material noch eine einen bleichbaren Bildfarbstoff enthaltende Schicht aufweisen.

Die Verarbeitung der belichteten Silberfarbbleichmaterialien erfolgt im allgemeinen in vier aufeinanderfolgenden Schritten: Silberentwicklung, Farbbleichung, Silberbleichung und Fixierung.

Im ersten Schritt wird das bei der Belichtung entstehende latente Silberbild entwickelt. Im zweiten Schritt wird, entsprechend der vorliegenden bildmässigen Verteilung des Silbers, der dem Silber zugeordnete Bildfarbstoff ausgebleicht. Der dritte Schritt ist notwendig, um das nach der Farbbleichung noch vorhandene überschüssige Bildsilber zu reoxidieren. Im vierten Schritt wird das nunmehr gänzlich in Form von Halogeniden vorliegende Silber durch Herauslösen mit einem Komplexbildner, insbesondere einem Salz der Thioschwefelsäure, entfernt, um das fertige Bild gegenüber weiterer Belichtung unempfindlich zu machen, und das reine Farbbild von Trübung zu befreien.

Der zweite Verfahrensschritt, die Farbbleichung, erfolgt bei den üblichen bekannten Verfahren in stark saurem Medium, wobei zur Beschleunigung der Farbbleichung ein Katalysator zugesetzt wird. Die Bleichbäder enthalten zudem einen Silberkomplexbildner oder Liganden. Beide Bestandteile, Katalysator und Ligand, sind notwendig, um die reduzierende Wirkung des metallischen, nichtdiffundierbaren Bildsilbers auf den ebenfalls nicht diffundierbaren Farbstoff zu übertragen. Die durch Reduktion am Bildsilber entstehende reduzierte Form des Katalysators dient dabei als Zwischenträger, welcher, nach Zurücklegung einer gewissen Diffusionsstrecke, den Farbstoff irreversibel reduziert und damit bleicht, und dabei selbst zur ursprünglichen Form reoxidiert wird.

Die Eigenschaft der reduzierten Stufe des Bleichkatalysators, zwischen Bildsilber und zu bleichendem Farbstoff frei zu diffundieren, ermöglicht es, Silber und Bildfarbstoff in einem gewissen Mass räumlich zu trennen, d.h. also den bleichbaren Farbstoff und die ihm zugeordnete Silberhalogenidemulsion nicht oder nur teilweise in der gleichen Schicht sondern in benachbarten Schichten anzuordnen. Solche Silberfarbbleichmaterialien sind z.B. in DE-A-2 o36 918, DE-A-2 132 835, und DE-A-2 132 836 beschrieben.

Eine Vereinfachung des Verarbeitungsprozesses, bei der die Farbstoffbleichung und die Silberbleichung zu einem einzigen Verfahrensschritt zusammengefasst werden, ist in der DE-A-2 488 433 beschrieben worden.

Die kombinierten Farb- und Silberbleichbäder (Zubereitungen) für die Verarbeitung des belichteten Silberfarbbleichmaterials enthalten die Komponenten (a) bis (e) und gegebenenfalls (f): (a) starke Säure, (b) wasserlösliches Jodid, (c) wasserlösliches Oxidationsmittel, (d) Oxidationsschutzmitel, (e) Bleichkatalysator, (f) Bleichbeschleuniger.

Die Menge der Bleichkatalysatoren, die in den vorzugsweise wässrigen Behandlungsbädern eingesetzt wird, kann in weiten Grenzen schwanken und beträgt etwa 0,05 bis 10 g/l Bleichbad.

Die Temperatur des Bleichbades liegt im allgemeinen zwischen 20 und 90°C, vorzugsweise zwischen 20 und 60°C, wobei natürlich bei höherer Temperatur die erforderliche Bearbeitungsdauer kürzer ist als bei tieferer Temperatur. Die Bleichbäder sind innerhalb des angegebenen Temperaturbereichs stabil. Im allgemeinen werden die für die Verarbeitung benötigten wässrigen Bleichzubereitungen in der Form verdünnter wässriger Lösungen, die die genannten Komponenten enthalten, verwendet. Es sind aber auch andere Methoden denkbar, z.B. die Anwendung in Pastenform.

Dieser Temperaturbereich gilt auch für die anderen Verarbeitungsschritte. Die wässrige Bleichzubereitung gemäss der vorliegenden Erfindung kann z.B. aus flüssigen, insbesondere wässrigen Konzentraten einzelner oder aller Komponenten (a) bis (f) hergestellt werden. Vorteilhaft verwendet man z.B. zwei flüssige Konzentrate, deren eines die starke Säure (a) und das Oxydationsmitel (c) und deren anderes die übrigen Komponenten (b), (d), (e) und gegebenenfalls (f) enthält, wobei in letzterem Konzentrat zur Verbesserung der Löslichkeit, insbesondere der Komponente (e) ein zusätzliches Lösungsmittel wie Aethyl- oder Propylalkohol, Benzylalkohol,

Aethylenglykolmethyl- oder -äthyläther zugesetzt werden kann. Die zur Anwendung gelangenden wässrigen Bleichzubereitungen enthalten in der Regel die Komponenten (a) bis (f) in den folgenden Mengen: (a) starke Säure: 10 bis 220 g/l; (b) wasserlösliches Jodid: 2 bis 50 g/l, vorzugsweise 5 bis 25 g/l; (c) wasserlösliches Oxydationsmittel: 1 bis 30 g/l; (d) Oxydationsschutzmittel: 0,5 bis 10 g/l; (e) Bleichkatalysatoren: 0,05 bis 10 g/l, und gegebenenfalls (f) Bleichbeschleuniger: 1 bis 20 g/l.

Als starke Säuren (Komponenten (a)), können die kombinierten Farb- und Silberbleichbäder Alkyl- oder Arylsulfonsäuren und insbesondere p-Toluolsulfonsäure, Schwefelsäure, Sulfaminsäure oder Trichloressigsäure enthalten. Gegebenenfalls können auch Gemische dieser Säuren eingesetzt werden. Der pH-Wert des Bleichbades ist insbesondere nicht grösser als 2 und vorzugsweise nicht grösser als 1.

Die wasserlöslichen Jodide (Komponente (b) sind in der Regel Alkalimetalljodide, insbesondere Natrium- und Kaliumjodid.

Als Oxydationsmittel (c) verwendet man zweckmässig wasserlösliche aromatische Mononitro- und Dinitroverbindungen, sowie Anthrachinonsulfonsäurederivate. Die Verwendung solcher Oxydationsmittel dient zur Beeinflussung des Farbgleichgewichts und des Kontrasts der im Farbbleichverfahren hergestellten Bilder und ist aus der deutschen Patentschrift 735,672, den britischen Patentschriften 539 190 und 539 509 und der japanischen Patentpublikation 22673/69 bekannt.

Die Mononitro- und Dinitroverbindungen sind vorzusweise Mono- und Dinitrobenzolsulfonsäuren, o-Nitrobenzolsulfonsäure, m-Nitrobenzolsulfonsäure, 2,4-Dinitrobenzolsulfonsäure, 3,5-Dinitrobenzolsulfonsäure, 3-Nitro-4-chlorbenzolsulfonsäure, 2-Chlor-5-nitrobenzolsulfonsäure, 4-Methyl-3,5-dinitrobenzolsulfonsäure, 3-Chlor-2,5-dinitrobenzolsulfonsäure, 2-Amino-4-nitrobenzolsulfonsäure, 2-Amino-4-nitro-5-methoxybenzolsulfonsäure, 4-Nitrophenol-2-sulfonsäure.

Die Verbindungen der Komponente (c) dienen neben ihrer Funktion als Silberbleichmittel zur Gradationsverflachung.

Als Oxydationsschutzmittel (Korrosionsschutzmittel) (d) werden mit Vorteil Reduktone oder wasserlösliche Mercaptoverbindungen verwendet. Geeignete Reduktone sind insbesondere aci-Reduktone mit einer 3-Carbonyldiol-(1,2)-Gruppierung, wie Redukton, Triose-Redukton oder vorzugsweise Ascorbinsäure. Als Mercaptoverbindungen kommen z.B. Thioglyzerin, insbesondere jedoch die Verbindungen der Formeln $HS-C_qH_{2q}-B$ oder vorzugsweise $HS-(CH_2)_m-COOH$ in Betracht, worin q eine ganze Zahl im Wert von 2 bis 12, B eine Sulfonsäure- oder Carbonsäuregruppe und m eine der Zahlen 3 und 4 bedeuten. Als Oxydationsschutzmittel verwendbare Mercaptoverbindungen sind in der DE-A-2,258,076 und der DE-A-2,423,814 beschrieben. Als weitere Oxydationsschutzmittel geeignet sind Alkalimetall-, Erdalkalimetall- und Ammoniumbisulfitaddukte von organischen Carbonylverbindungen, vorzugsweise Alkalimetall- oder Ammoniumbisulfitaddukte von Monoaldehyden mit 1 bis 4 oder Dialdehyden mit 2 bis 5 Kohlenstoffatomen (DE-A-2 737 142).

Beispielsweise genannt seien das besonders bevorzugte Formaldehydbisulfitaddukt, ferner die entsprechenden Addukte von Acetaldehyd, Propionaldehyd, Butyraldehyd oder Isobutyraldehyd, von Glyoxal, Malondialdehyd oder Glutardialdehyd. Gegebebenfalls sind auch die nachfolgend als Bleichbeschleuniger bezeichneten tertiären wasserlöslichen Phosphine gleichzeitig als Oxydationsschutzmittel einsetzbar.

Geeignete Bleichbeschleuniger (f) sind z.B. quaternäre Ammoniumsalze, wie sie aus den DE-A-2 139 401 und 2 716 136 bekannt sind. Bevorzugt handelt es sich dabei um quaternäre, gegebenenfalls substituierte Piperidin-, Piperazin-, Pyrazin-, Chinolin- oder Pyridinverbindungen, wobei letztere bevorzugt sind. Ferner können auch Tetraalkylammoniumverbindungen (Alkyl mit 1 bis 4 Kohlenstoffatomen) und Alkylendiammoniumverbindungen (Alkylen mit 2 bis 6 Kohlenstoffatomen) in Frage kommen. Im einzelnen seien genannt:

Tetraäthylammoniumjodid; $(CH_3)_3N^{\oplus}(CH_2)_2N^{\oplus}(CH_3)_3 \cdot 2J^{\ominus}$; $(CH_3)_3N^{\oplus}(CH_2)_6N^{\oplus}(CH_3)_3 \cdot 2J^{\ominus}$; N-Methylpyridiniumjodid; N-Methylchinoliniumjodid; N-Hydroxyäthylpyridiniumchlorid; N-Hydroxypropylpyridiniumbromid; N-Methyl-2-Hydroxymethylpyridiniumjodid; N,N-Dimethylpiperidiniumjodid; N,N'-Dimethylpyraziniumfluorsulfat und γ-Picoliniumhydrogensulfat.

Weitere Bleichbeschleuniger sind die aus der DE-A-2 651 969 bekannten wasserlöslichen tertiären Phosphine, die vorzugsweise mindestens eine Cyanoäthylgruppe enthalten, wie z.B. Bis-(ß-cyanoäthyl)-2-sulfoäthylphosphin (Natriumsalz), Bis-(ß-cyanoäthyl)-3-sulfopropylphosphin (Natriumsalz), Bis-(ß-cyanoäthyl)-4-sulfobutylphosphin (Natriumsalz), Bis-(ß-cyanoäthyl)-2-methoxyäthylphosphin, Bis-(2-methoxyäthyl)-(ß-cyanoäthyl)-phosphin, (ß-Cyanoäthyl)-phenyl-3-sulfopropylphosphin (Natriumsalz), (ß-Cyanoäthyl)-phenyl-2-methoxyäthylphosphin und Bis-(2-methoxyäthyl)-phenylphosphin.

Zur Silberentwicklung können Bäder üblicher Zusammensetzung angewendet werden, z.B. solche, die als Entwicklersubstanz Hydrochinon und gegebenenfalls zusätzlich 1-Phenyl-3-pyrazolidinon enthalten. Gegebenenfalls enthält bereits das Silberentwicklungsbad einen Bleichkatalysator.

Das Silberfixierbad kann in bekannter und üblicher Weise zusammengesetzt sein. Als Fixiermittel dient z.B. Natriumthiosulfat oder mit Vorteil Ammoniumthiosulfat, gewünschtenfalls mit Zusätzen wie Natriumbisulfit und/oder Natriummetabisulfit.

Die aus dem erfindungsgemässen Material hergestellten Bilder zeichnen sich durch eine gute Wiedergabe und Lesbarkeit der abgebildeten Details aus. Die Bildfarbstoffe besitzen auch die geforderte hohe Absorption im ultravioletten Spektralbereich. Diese Eigenschaften ermöglichen die Verwendung der Bilder als Vorlage zur Herstellung von z.B. Kopien nach dem Diazotypieverfahren. Beispielsweise können die mit dem erfindungsgemässen Material hergestellten Bilder in Form von Microfiches vorliegen. Die darauf enthaltenen Informationen können dann vergrössert und auf Diazotypiematerial kopiert werden. Geeignete Diazotypiematerialien sind z.B. in DE 1 285 874 und DE 2 166 264 beschrieben.

Mit dem erfindungsgemässen Material können aber auch Schwarzweissbilder von guter Qualität hergestellt werden.

Herstellungsbeispiele

Beispiel 1: Farbstoff der Formel

(102)

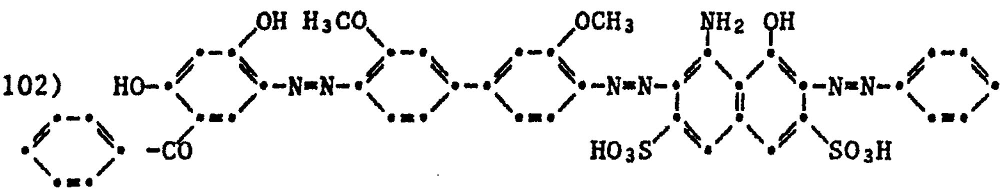

Ein Gemisch von 12,2 g (0,05 m) o-Dianisidin in 50 ml Wasser und 11,5 ml konz. Salzsäure (39 %) wird auf 80°C erhitzt, abgekühlt und nochmals mit 11,5 ml Salzsäure (39 %) versetzt. Die Lösung wird unter Eiskühlung mit 8,0 g (0,115 m) Natriumnitrit tetrazotiert und nach Zerstörung des überschüssigen Nitrits mit Sulfaminsäure auf 22,0 g H-Säure 72.7 %) (0,05 m) sauer gekuppelt. Anschliessend werden 4,4 g (0,047 m) Anilin diazotiert und dem Zwischenprodukt zugesetzt. Die Kupplung erfolgt durch Erhöhung des pH-Wertes auf 9 mittels Natriumcarbonat. Nach 1 Stunde wird der pH-Wert mittels Soda auf 10 erhöht und eine wässrige Lösung von 11,8 g (0,005 m) 2,4-Dihydroxybenzophenon, die mit wässriger Natriumhydroxidlösung auf pH 10 eingestellt woden ist, zugetropft. Nach 1 Stunde bei 10°C erwärmt man das Reaktionsgemisch auf 50°C und kühlt es wieder ab. Beim Ansäuern mit Salzsäure auf pH 1 fällt der Farbstoff der Formel (102) aus. Er wird durch wiederholtes Suspendieren in warmem Pyridin und Aethanol gereinigt. Man erhält 12,6 g Farbstoff (55,7 % Ausbeute).

Beispiel 2: Farbstoff der Formel

(103)
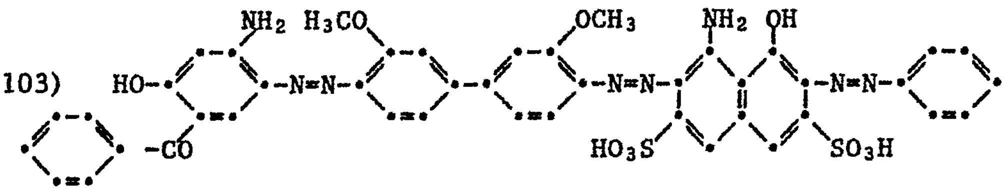

Ersetzt man in Beispiel 1 Dihydroxybenzophenon durch eine äquivalente Menge 4-Amino-2-hydroxybenzophenon und kuppelt dieses bei pH 8,2 auf das Diazozwischenprodukt, erhält man 6,9 g des Trisazofarbstoffs der Formel (103) (30,5 % Ausbeute).

Beispiel 3: Farbstoff der Formel

(104)
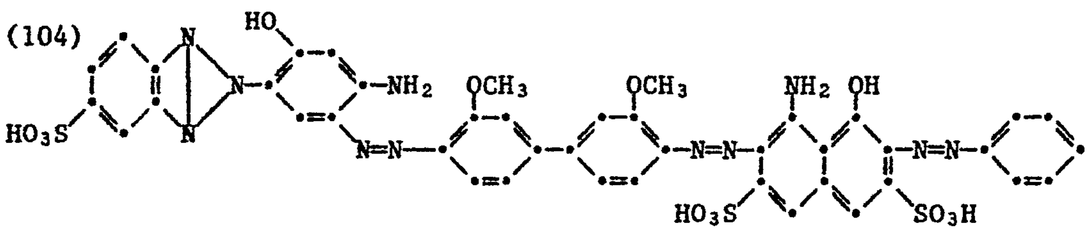

Ersetzt man in Beispiel 1 Dihydroxybenzophenon durch eine äquivalente Menge 2-(4-Amino-2-hydroxy)-phenyl-benztriazol-5-sulfosäure und kuppelt diese bei pH 8,2 auf das Diazozwischenprodukt, erhält man 17,9 g des Farbstoffes der Formel (104) (7,8 % Ausbeute).

Beispiel 4: Farbstoff der Formel

(202)
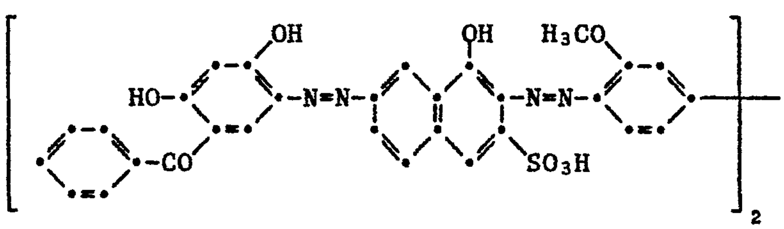

12,2 g (0,05 m) o-Dianisidin werden wie in Beispiel 1 tetrazotiert. Die Tetrazolösung wird bei 10°C zu einer Kupplerlösung aus 33,6 g (0,10 m) Gammasäure (71,2 %) und 4 g Natriumhydroxid in 350 ml

Wasser getropft, wobei der pH-Wert zwischen 8 und 9 gehalten wird. Nach Rühren über Nacht erwärmt man das Reaktionsgemisch auf 60°C und kühlt wieder ab. Das durch Filtrieren isolierte Zwischenprodukt wird durch mehrmaliges Aufschlämmen in warmem Aethanol gereinigt.
7,9 g (0,01 m) Zwischenprodukt (als 100%ig gerechnet) in wässrigsalzsaurer Lösung (pH 2) wird mit 1,5 g (0,022 m) Natriumnitrit tetrazotiert. Nach Zerstörung des überschüssigen Nitrits mittels Sulfaminsäure wird die Tetrazolösung auf 5,1 g (0,024 m) 2,4-Dihydroxy-benzophenon, das in 80 ml Wasser gelöst und mit wässriger Natriumhydroxidlösung auf pH 10 eingestellt worden ist, unter Konstanthalten des pH-Wertes bei 10 mittels Natriumcarbonat gekuppelt. Das Reaktionsgemisch wird 4 Stunden bei 10°C nachgerührt, dann auf 40°C erwärmt, wieder abgekühlt und filtriert. Das isolierte Rohprodukt wird wie in Beispiel 1 gereinigt. Man erhält 8,7 g Farbstoff der Formel (202) (70,2 %) Ausbeute.

<u>Beispiel 5</u>: Farbstoff der Formel

(203) 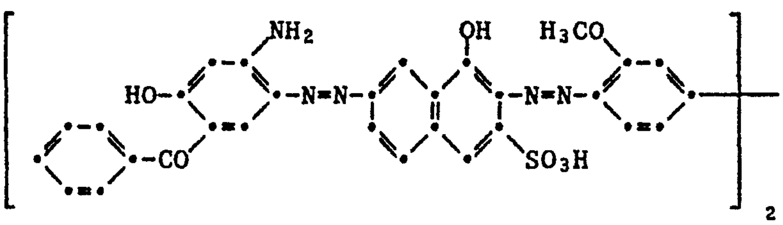

Bei Vorgehen wie in Beispiel 4, jedoch unter Ersatz des Dihydroxybenzophenons durch eine äquivalente Menge 4-Amino-2-hydroxy-benzophenon und Kupplung bei pH 8,5 erhält man 9,0 g des Tetrakisazofarbstoffs der Formel (203) (73,1 % Ausbeute).

<u>Beispiel 6</u>:

(204) 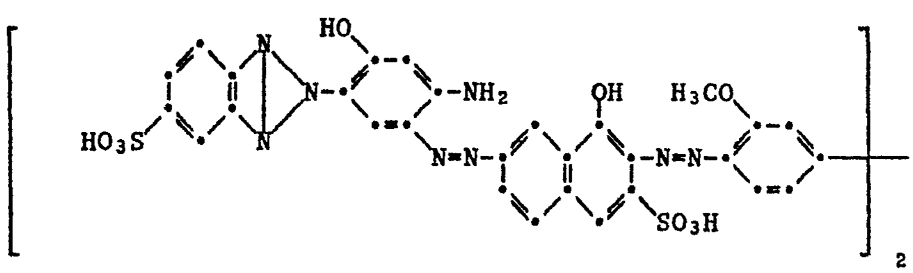

Ersetzt man das Dihydroxybenzophenon in Beispiel 4 durch 2-(4-Amino-2-hydroxy)-phenylbenztriazol-5-sulfosäure und kuppelt bei pH 8,5, erhält man 10,7 g des Tetrakisazofarbstoffes der Formel (204) (73,2 % Ausbeute.)

Beispiel 7: Farbstoff der Formel

(206) 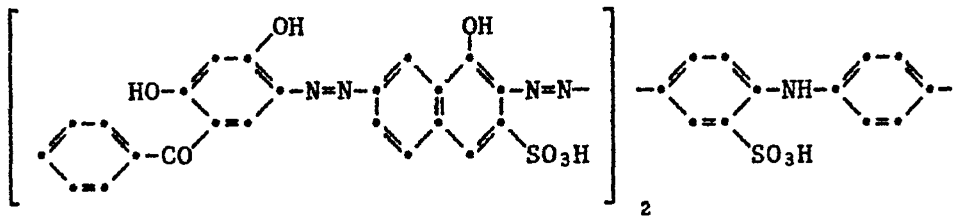

11,2 g (0,4 m) 4,4'-Di-(aminophenyl)-amin-2-sulfosäure werden in 1500 ml Wasser suspendiert. Nach Ansäuern mit 140 ml Salzsäure tetrazotiert man mit 57 g(0,83 m) Natriumnitrit gelöst in 75 ml Wasser bei 0°C. Nach einer Stunde wird der Nitritüberschuss mit Sulfaminsäure vernichtet. 215 g (0,9 m) Gammasäure werden in 720 ml Wasser durch Zugabe von wässriger Natriumhydroxidlösung bei pH 7 gelöst. Nach Zusatz von 1200 ml Natriumcarbonatlösung 14%ig tropft man die Tetrazolösung innert 30 Minuten bei einer Temperatur von höchstens 10°C zu. Die erhaltene Suspension wird 2 Stunden nachgerührt, dann auf 20°C und schliesslich auf 40 bis 50°C erwärmt. Die Suspension wird bei 20°C filtriert und das feuchte Rohprodukt zweimal in 400 ml Aethanol heiss aufgeschlämmt.

33,8 g (0,4) dieses Zwischenproduktes suspendiert in 1100 ml Wasser und mit 9,5 ml konz. Schwefelsäure (93 %) angesäuert werden bei 0 bis 5°C mittels 6,1 g (0,088 m) Natriumnitrit tetrazotiert. Nach 4 Stunden bei 0 bis 5°C wird der Nitritüberschuss mit Sulfaminsäure zerstört. 20,6 g (0,096 m) 2,4-Dihydroxybenzophenon werden in 320 ml Wasser unter Zugabe von 10 ml wässriger Natriumhydroxidlösung (10 m) und 80 ml Sodalösung (14 %) durch Erwärmen gelöst. Die Kupplung erfolgt durch Zutropfen der Tetrazolösung bei einer Temperatur von höchstens 10°C unter Konstanthalten des pH-Wertes bei 10 mittels

Natriumcarbonat. Nach 4 Stunden Nachreaktion bei 10°C erwärmt man das Reaktionsgemisch auf 30°C bis alles in Lösung gegangen ist. Durch Ansäuern mittels Schwefelsäure auf pH 1 wird der Farbstoff ausgefällt und filtriert. Das feuchte Rohprodukt wird durch Aufschlämmen in heissem Methanol und anschliessend in Schwefelsäure (1n) gereinigt. Man erhält 9,8 g Farbstoff der Formel (206) (39,2 % Ausbeute).

Beispiel 8: Farbstoff der Formel

(207) 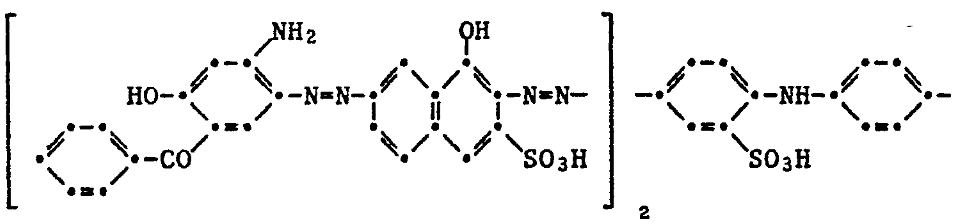

Man kuppelt das tetrazotierte Zwischenprodukt aus Beispiel 7 auf eine äquivalente Menge 4-Amino-2-hydroxy-benzophenon anstelle von 2,4-Dihydroxy-benzophenon bei pH 5,5 durch Pufferung mit Natriumacetat. Den Farbstoff reinigt man durch Aufschlämmen in Pyridin und Aethanol wie in Beispiel 1. Man erhält 10,9 g Farbstoff der Formel (207) (42,0 % Ausbeute).

Beispiel 9: Farbstoff der Formel

(208) 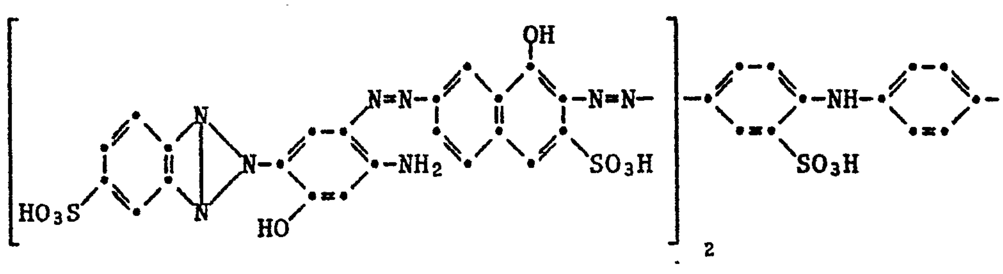

Durch Kupplung des tetrazotierten Zwischenproduktes aus Beispiel 7 auf eine äquivalente Menge 2-(4-Amino-2-hydroxy)-phenyl-benztriazol-5-sulfosäure anstelle von 2,4-Dihydroxy-benzophenon bei pH 10 und

Reinigung des Rohfarbstoffes wie in Beispiel 1 wird der Tetrakisazofarbstoff der Formel (208) in 79,4%iger Ausbeute (14,2 g) erhalten.

Beispiel 10: Farbstoff der Formel

(209) 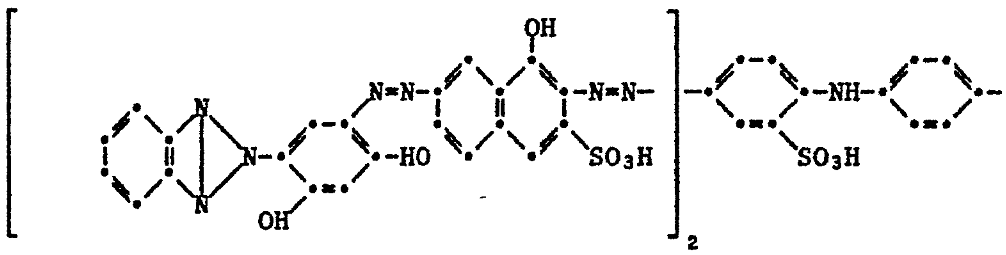

Durch Kupplung des tetrazotierten Zwischenproduktes aus Beispiel 7 auf eine äquivalente Menge in Aceton gelöstem 2-(2,4-Dihydroxyphenyl)-benztriazol anstelle von 2,4-Dihydroxy-benzophenon und Reinigung des Rohproduktes gemäss Beispiel 1 erhält man den Tetrakisazofarbstoff der Formel (209) in 78,2%iger Ausbeute (13,1 g).

Beispiel 11: Farbstoff der Formel

(302) 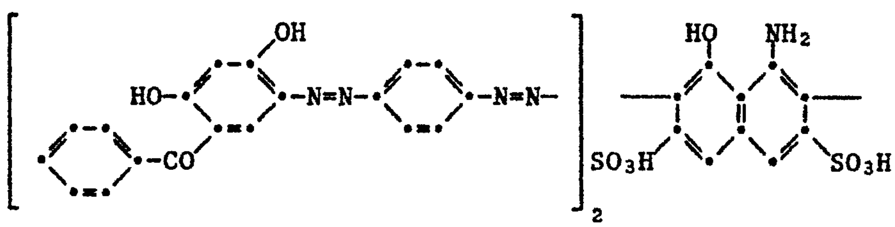

11.2 g (0,020 m) des Disazofarbstoffes

(302a) 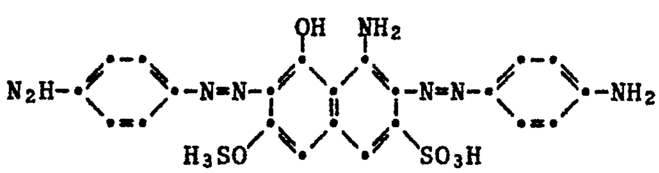

werden in salzsaurer Lösung mit 3,0 g (0,044 m) Natriumnitrit tetrazotiert, der Nitritüberschuss mit Sulfaminsäure zerstört und das Tetrazoniumsalz auf 9,4 g (0,044 m) 2,4-Dihydroxy-benzophenon

wie in Beispiel 1 gekuppelt. Der Rohfarbstoff wird wie in Beispiel 1 gereinigt. Man erhält 10,6 g des Farbstoffs der Formel (302) (50,4 % Ausbeute).

Der Disazofarbstoff der Formel (302a) wird in bekannter Weise hergestellt, indem zuerst 1 Mol diazotiertes p-Nitroanilin sauer auf 1 Mol 1-Amino-8-naphthol-3,6-disulfonsäure gekuppelt, auf den entstandenen Monoazofarbstoff anschliessend ein zweites Mol diazotiertes p-Nitroanilin alkalisch gekuppelt wird und schliesslich die beiden Nitrogruppen des Disazofarbstoffs mit Natriumsulfid zu Aminogruppen reduziert werden.

Beispiel 12: Farbstoff der Formel

(303) 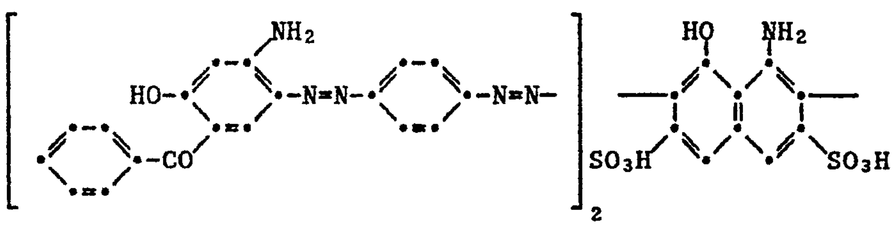

11.2 g (0,020 m) des Disazofarbstoffes der Formel (302a) werden in gleicher Weise tetrazotiert und bei pH 8,5 auf 9,4 g (0,044 m) 4-Amino-2-hydroxy-benzophenon gekuppelt. Man erhält den Farbstoff der Formel (303) in 21,2%iger Ausbeute (4,5 g).

Beispiel 13: Farbstoff der Formel

(402) 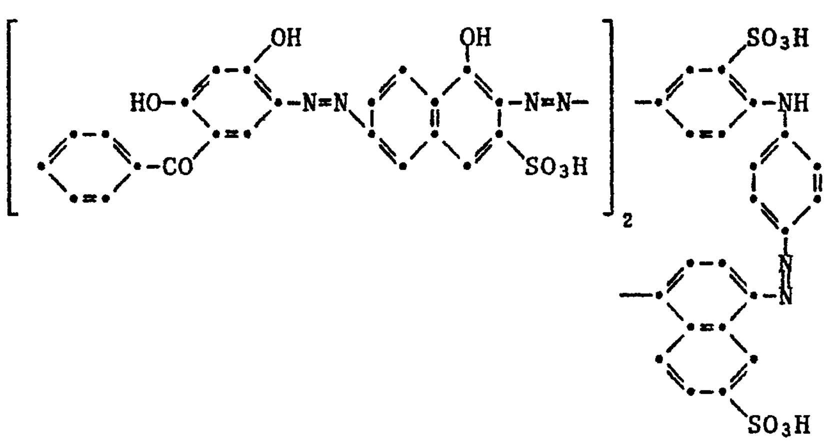

5.5 g (0,005 m) des Trisazofarbstoffs der Formel

(402a)

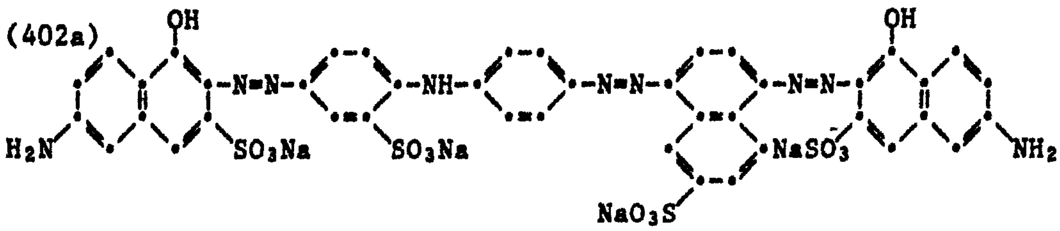

werden in salzsaurer Lösung mit 0,8 g (0,011 m) Natriumnitrit tetrazotiert, der Nitritüberschuss mit Sulfaminsäure zerstört und das Tetrazoniumsalz bei pH 10 auf 2,6 g (0,012 m) 2,4-Dihydroxybenzophenon gekuppelt. Man erhält den Pentakisazofarbstoff der Formel (402) als Rohprodukt. Dieses wird wie in Beispiel 1 beschrieben gereinigt. Ausbeute 51,9 % (4,0 g).

Die Herstellung des Trisazofarbstoffes der Formel (402a) ist in DE-A-22 15 081 beschrieben.

<u>Beispiel 14</u>: Farbstoff der Formel

(403)

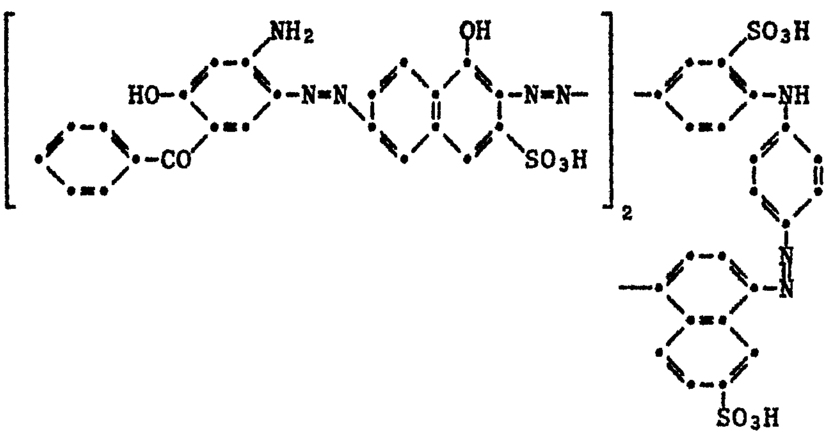

5,5 g (0,005 m) des Trisazofarbstoffes der Formel (402a) werden wie in Beispiel 13 tetrazotiert und bei pH 8,5 auf 2,6 g (0,012 m) 4-Amino-2-hydroxy-benzophenon gekuppelt. Man erhält 7,5 g des Farbstoffs der Formel (403) (51,9 % Ausbeute).

Beispiel 15: Farbstoff der Formel

(404) 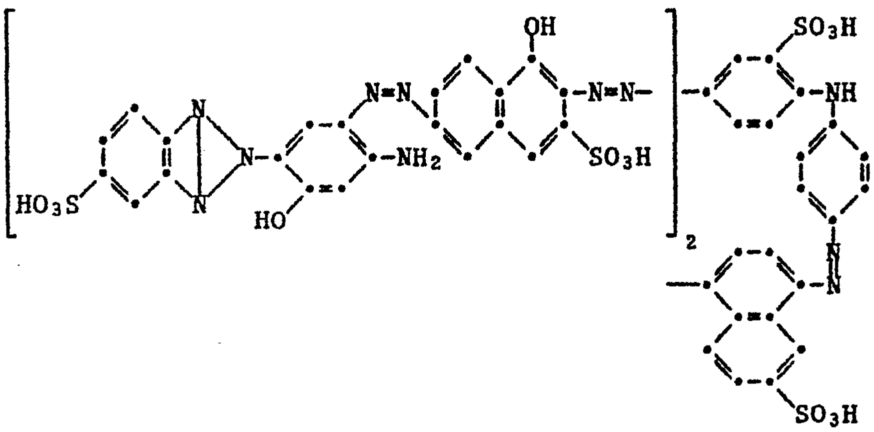

Tetrazotierung von 5,5 g (0,005 m) des Trisazofarbstoffes der Formel (402a) und Kupplung des Tetrazoniumsalzes auf 3,7 g (0,012 m) 2-(4-Amino-2-hydroxy)-phenyl-benztriazol-5-sulfonsäure bei pH 8,5 ergibt 4,0 g des Pentakisazofarbstoffs der Formel (404) (44,9 % Ausbeute).

Beispiel 16: Farbstoff der Formel

(405) 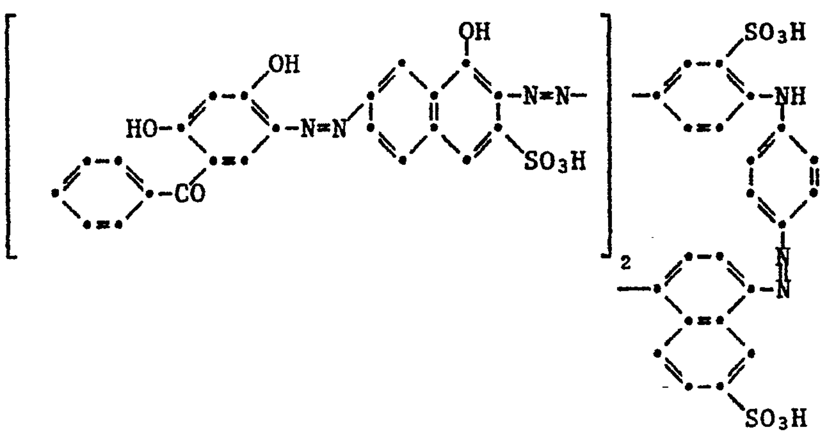

Wird der Trisazofarbstoff der Formel (402a) durch das isomere Ausgangsprodukt der Formel

(402b) 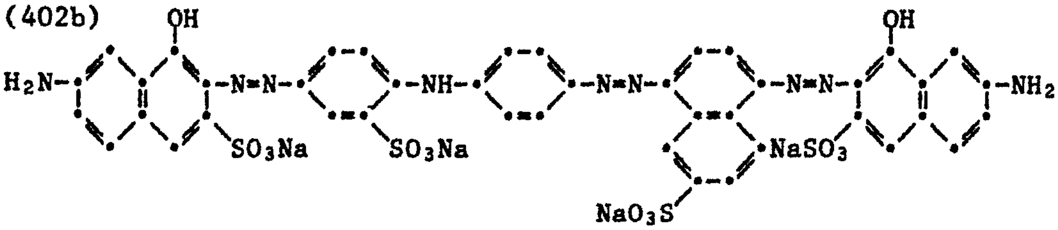

ersetzt und gleich verfahren wie in dem Beispiel 13, erhält man den Pentakisazofarbstoff der Formel (405) in 66,6%iger Ausbeute (8,1 g).

<u>Beispiel 17</u>: Farbstoff der Formel

(406) 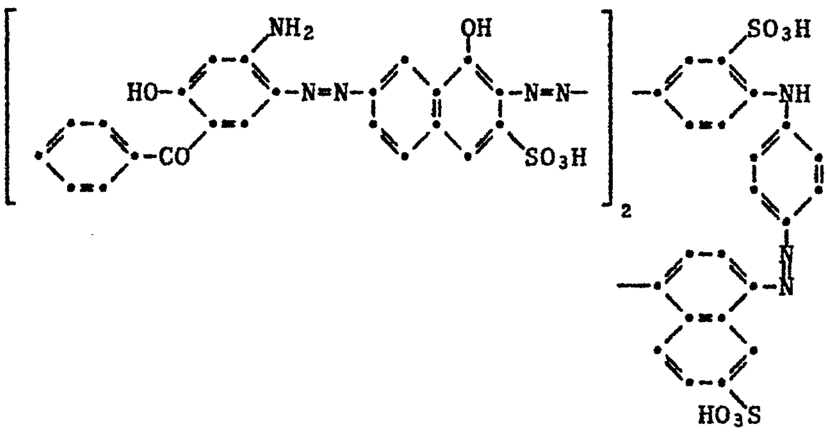

Wird der Trisazofarbstoff der Formel (402a) durch denjenigen der Formel (402b) ersetzt und wie in Beispiel 14 verfahren, so erhält man 5,9 g des Pentakisazofarbstoffs der Formel (406) (63,6 % Ausbeute).

<u>Beispiel 18</u>: Farbstoff der Formel

(407) 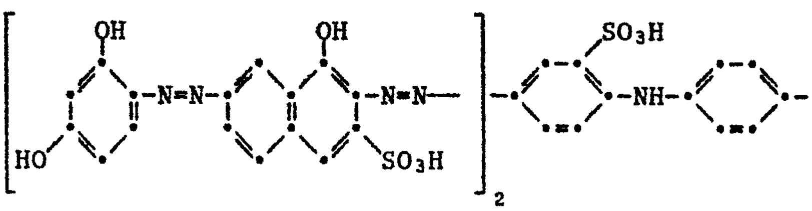

38 g (0,04 m) des Disazofarbstoffes der Formel

(407a) 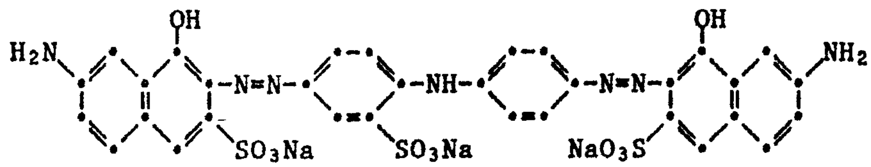

werden in 1100 ml Wasser suspendiert. Die erhaltene Suspension wird auf 50°C erwärmt und wieder auf Raumtemperartur abgekühlt. 6,1 g (0,088 m) Natriumnitrit gelöst in 30 ml Wasser werden zugesetzt. Danach wird im Eisbad auf 0 bis 5°C abgekühlt. Man setzt anschliessend 30 ml (0,35 m) konz. Salzsäure hinzu und rührt die Suspension 4 Stunden bei 0 bis 5°C. Der Nitritüberschuss wird dann mit Sulfaminsäure zerstört. Die so erhaltene Tetrazosuspension wird innerhalb von 30 Minuten einer auf 0°C gekühlten Kupplerlösung hinzugefügt, die 9,7 g Resorcin (0,088 m) und 31,8 g (0,30 m) Natriumcarbonat in 100 ml Wasser enthält. Durch gleichzeitige Zugabe von etwa 280 ml Natriumcarbonatlösung (14 %) wird der pH-Wert während des Zutropfens der Tetrazosuspension zur Kupplerlösung konstant bei 10 gehalten. Das Reaktionsgemisch lässt man 4 Stunden bei einer Temperatur unter 10°C nachreagieren und danach sich auf Raumtemperatur erwärmen. Nach erwärmen des Reaktionsgemisches auf 40°C während 1 Stunde wird das Rohprodukt (200 g) isoliert und in 900 ml Wasser suspendiert. Mit wässriger Natriumhydroxidlösung (30 %) wird ein pH-Wert von 12 eingestellt, die Suspension bei 70°C solange gerührt, bis sich eine Lösung bildet. Diese wird filtriert und die Verbindung der Formel (407) als Rohprodukt durch Zugabe von 30 ml konz. Salzsäure ausgefällt. Die Reinigung dieses Rohproduktes erfolgt durch 30-minütiges Kochen in Aethanol und Trocknen des Produkts bei 70°C im Vakuum. Man erhält 32 g (71,2 % Ausbeute) der Verbindung der Formel (407).

In der folgenden Tabelle 1 sind die Lage des Absorptionsmaximums und die molaren Extinktionskoeffizienten einer Lösung der in den Beispielen 1 bis 17 hergestellten erfindungsgemässen Farbstoffe in einer Mischung von Dimethylformamid (DMF/$H_2O$(1:1)) wiedergegeben.

Tabelle 1

| Farbstoffe der Formel | $\lambda_{max}$ (nm) | $\varepsilon_{mol}$ |
|---|---|---|
| 102 | 567 | 35 500 |
| 103 | 574 | 37 600 |
| 104 | 575 | 41 800 |
| 202 | 618 | 69 200 |
| 203 | 609 | 81 400 |
| 204 | 615 | 81 100 |
| 206 | 609 | 61 100 |
| 207 | 583 | 58 100 |
| 208 | 610 | 60 600 |
| 209 | 582 | 67 000 |
| 302 | 652 | 67 100 |
| 303 | 623 | 26 800 |
| 402 | 587 | 49 000 |
| 403 | 585 | 52 000 |
| 404 | 595 | 65 400 |
| 405 | 612 | 63 800 |
| 406 | 611 | 58 200 |
| 407 | 610 | 56 300 |

Anwendungsbeispiele

Beispiel 19: 364 mg Farbstoff der Formel

(101) 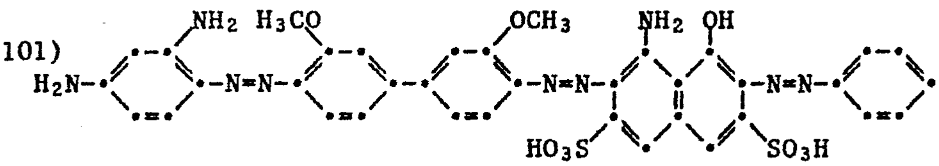

(Vergleichsverbindung) werden in 50 ml Wasser gelöst und zu einer Mischung aus 38 ml 3,7%iger wässriger Gelatinelösung, 1 ml einer 8%igen Lösung des Natriumsalzes der Dibutylnaphthalinsulfonsäure sowie 11 g einer spektral nicht sensibilisierten Gelatinesilberchlorojodobromidemulsion, die etwa 140 g Silber und 70 g Gelatine pro Kilogramm enthält, gegeben. Dieses Gemisch wird zusammen mit einer Schutzschicht bestehend aus 37,4 ml 3,9%iger wässriger Gelatinelösung, 1 ml einer 6%igen Lösung des Natriumsalzes des Bis-2-äthylhexylesters der Sulfobernsteinsäure, 1 ml einer 3%igen Lösung eines Fettsäurealkanolamides und 0,6 ml einer 10%igen Lösung von Formaldehyd auf 1 $m^2$ eines Polyesterträgers vergossen und getrocknet.

Hinter einem Stufenkeil wird das so erhaltene lichtempfindliche Material durch ein Blaufilter während 1 Sekunde mit 10'000 Lux/$cm^2$ belichtet und bei 30°C wie folgt verarbeitet:

| | |
|---|---|
| Entwicklung | 1,5 Minuten |
| Wässerung | 0,5 Minuten |
| Silber- und Farbbleichung | 1,5 Minuten |
| Wässerung | 0,5 Minuten |
| Fixierung | 1,5 Minuten |
| Wässerung | 3 Minuten |
| Trocknung | |

Das Entwicklerbad enthält pro Liter Lösung folgende Komponenten:

| | |
|---|---|
| Natriumsulfit | 38,0 g |
| Kaliumsulfit | 19,9 g |
| Lithiumsulfit | 0,6 g |
| 1-Phenyl-3-pyrazolidinon | 1,0 g |
| Hydrochinon | 12.0 g |
| Kaliumcarbonat | 29,1 g |
| Kaliumbromid | 1,5 g |
| Benztriazol | 0,5 g |
| Aethylendiamintetra-essigsäure (Natriumsalz) | 4,0 g |

Das Silberbleichbad weist pro Liter Lösung folgende Zusammensetzung auf:

| | |
|---|---|
| konzentrierte Schwefelsäure | 56,2 g |
| m-Nitrobenzolsulfonsäure (Natriumsalz) | 6,0 g |
| Kaliumiodid | 8,0 g |
| Hydroxyäthylpyridiniumchlorid | 2,4 g |
| 2,3-Dimethylchinoxalin | 2,5 g |
| 4-Mercaptobuttersäure | 1,8 g |

Das Fixierbad enthält pro Liter Lösung:

| | |
|---|---|
| Ammoniumthiosulfat | 200 g |
| Ammoniummetabisulfit | 24 g |

Man erhält einen lichtechten Farbkeil mit einem tiefen molekularen Extinktionskoeffizienten bei 350 nm an den ungebleichten Stellen (vgl. Tabelle 2).

Auf analoge Weise können die übrigen erfindungsgemässen Farbstoffe in die Schichten photographischer Materialien eingearbeitet werden. Tabelle 2 gibt die Mengen des eingearbeiteten Farbstoffs sowie die entsprechenden molaren Extinktionskoeffizienten in der Schicht des photographischen Materials wieder.

Tabelle 2

| Farbstoff der Formel | Menge (mg) | ξ (350 nm) |
|---|---|---|
| 101 (Vergleich) | 364 | 15 400 |
| 102 | 412 | 25 000 |
| 103 | 412 | 28 100 |
| 104 | 454 | 36 200 |
| 201 (Vergleich) | 468 | 22 800 |
| 202 | 565 | 34 200 |
| 203 | 564 | 41 800 |
| 204 | 669 | 44 700 |
| 205 (Vergleich) | 464 | 21 000 |
| 206 | 591 | 39 000 |
| 207 | 590 | 36 000 |
| 208 | 645 | 44 500 |
| 209 | 617 | 43 900 |

Tabelle 2 (Fortsetzung)

| Farbstoff der Formel | Menge (mg) | ξ (350 nm) |
|---|---|---|
| 301 (Vergleich) | 383 | 12 700 |
| 302 | 480 | 20 200 |
| 303 | 479 | 23 800 |
| 401 (Vergleich) | 611 | 28 900 |
| 402 | 705 | 38 400 |
| 403 | 707 | 41 900 |
| 404 | 811 | 41 900 |
| 405 | 711 | 40 200 |
| 406 | 540 | 39 900 |
| 407 | 620 | 39 100 |

Die Tabelle verdeutlicht, dass das UV-Absorptionsvermögen der erfindungsgemässen Verbindungen in photographischem Material wesentlich höher ist als das der entsprechenden Vergleichsverbindungen ohne UV-absorbierende Gruppen.

Die Vergleichsverbindungen der Formeln (201), (205), (301) und (401) besitzen die folgenden Strukturen:

(201) 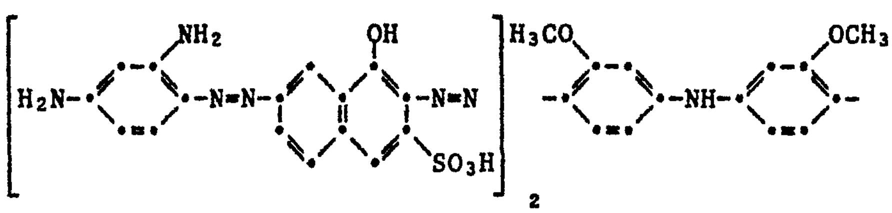

(205) 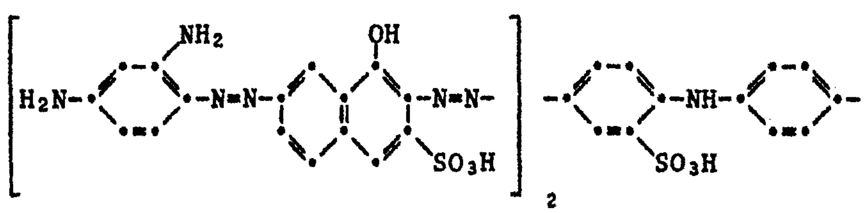

(301) 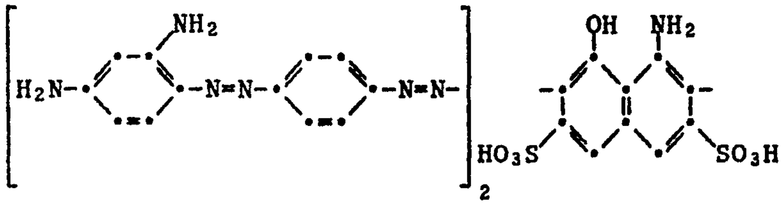

(401) 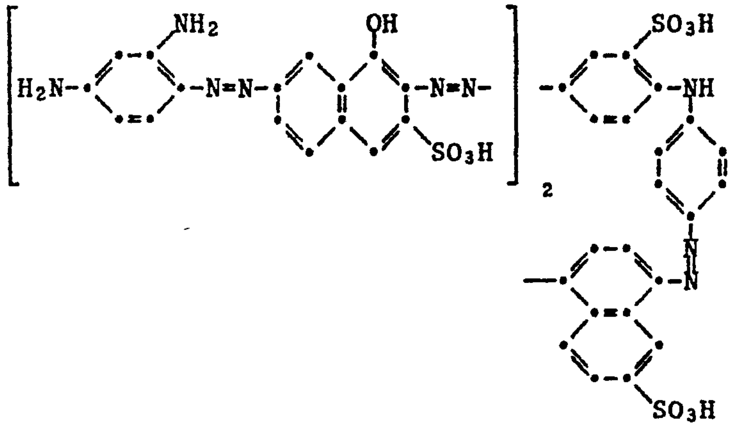

Die Vergleichsverbindungen unterscheiden sich von den entsprechenden erfindungsgemässen Verbindungen nur durch die Gruppen B und B'.

Beispiel 20: 633 mg Farbstoff der Formel (206) werden in 56 ml Wasser gelöst und zu einer Mischung aus 42 ml 3,7 %iger, wässriger Gelatinelösung, 1 ml einer 8 %igen Lösung des Natriumsalzes der Dibutylnaphthalinsulfonsäure sowie 12 g einer spektral unsensibilisierten Gelatinesilberchlorojodobromidemulsion, die etwa 140 g Silber und 70 g Gelatine pro Kilogramm enthält, gegeben.

Dieses Gemisch wird zusammen mit einer Schutzschicht, bestehend aus 37,4 ml 3,9 %iger wässriger Gelatinelösung, 1 ml einer 6 %igen Lösung des Natriumsalzes des Bis-2-äthylhexylesters der Sulfobernsteinsäure, 1 ml einer 3 %igen Lösung eines Fettsäurealkanolamides und 0,6 ml einer 10 %igen Lösung von Formaldehyd auf 1 $m^2$ eines Polyesterträgers vergossen und getrocknet.

Auf das so erhaltene lichtempfindliche Material wurde in an sich bekannter Weise ein Mikrofiche aufbelichtet und wie in Beispiel 19 beschrieben, verarbeitet.

Das verarbeitete photographische Material besass eine Maximaldichte von 1,70 gemessen durch einen UV-Filter des Typs Wratten 18 A.

Die Duplikation auf ein Diazomaterial ergab Kopien guter Qualität bei einer Belichtungszeit von 4 Sekunden gegenüber 5 Sekunden für einen handelsüblichen Silber-Mikrofilm.

Patentansprüche

1. Verbindungen der Formel

(1) $(B-L)_m A (L'-B')_n$ ,

worin A der Rest eines Bis- oder Trisazofarbstoffs ist, L und L' gleich oder voneinander verschieden sind und ein Brückenglied bedeuten, B und B' gleich oder voneinander verschieden sind und einen aromatischen Rest bedeuten, wobei mindestens einer der Reste B und B' spektrale Absorption im UV-Bereich aufweist, und einer der Reste B und B' verschieden von 2,4-Dihydroxyphenyl ist, und m 1 oder 2 und n 0, 1 oder 2 ist.

2. Verbindungen nach Anspruch 1, dadurch gekennzeichnet, dass A ein Rest der Formel

- E - N = N - D - N = N - E',

- E - N = N - D - N = N - E' - ,

- E - N = N - D - N = N - D' - N = N - E' oder

- E - N = N - D - N = N - D' - N = N - E' -

ist, worin E, E', D und D' unabhängig voneinander ein Rest der Formel

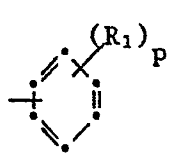 , 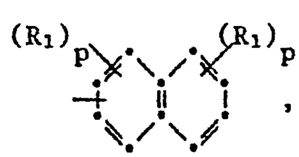 , 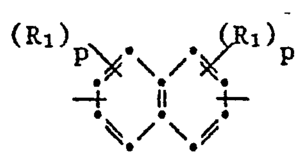

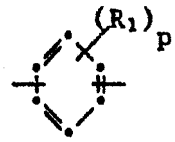 , 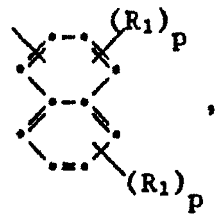 , 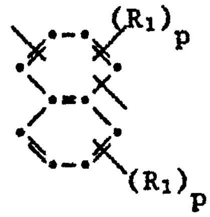

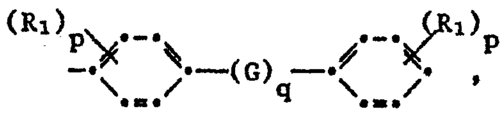 , 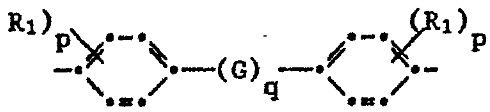

sind, worin $R_1$ Wasserstoff, Alkyl, Alkoxy, Alkylthio, Alkyl- oder Dialkylamino, Amino, Aryl, Halogen, Nitro, Cyano, Hydroxyl, Mercapto, Acylamido, Sulfo, Amidosulfonyl, Carboxyl oder Amidocarbonyl, p 0, 1, 2 oder 3, G ein gerad- oder verzweigtkettiger oder heterocyclischer organischer Rest oder -O-, -S-, $-SO_2-$, -NH-, -N=N- oder

$$-\underset{\substack{\downarrow \\ O}}{N}=N-$$

und q 0 oder 1 ist.

3. Verbindungen nach Anspruch 2, dadurch gekennzeichnet, dass $R_1$ Alkyl, Alkoxy, Alkylthio, Alkyl- oder Dialkylamino mit je 1 bis 4 Kohlenstoffatomen, Phenyl, Amino, Chlor, Nitro, Cyano, Hydroxyl, Mercapto, Acylamido, Sulfo, Amidosulfonyl, Carboxyl oder Amidocarbonyl ist.

4. Verbindungen nach Anspruch 3, dadurch gekennzeichnet, dass $R_1$ Alkoxy mit 1 bis 4 Kohlenstoffatomen, Amino, Hydroxyl oder Sulfo ist.

5. Verbindungen nach Anspruch 2, dadurch gekennzeichnet, dass G Alkylen, Alkenylen, Alkylsulfonylen oder Alkylimino mit je 1 bis 4 Kohlenstoffatomen, -NHCO-, $-NHSO_2-$, -NHCONH-, -NHCSNH-, -O-, -S-, $-SO_2-$, -NH-, -N=N- oder

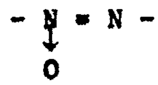

ist.

6. Verbindungen nach Anspruch 5, dadurch gekennzeichnet, dass G Alkylen oder Alkylimino mit je 1 bis 4 Kohlenstoffatomen, -NH- oder -N=N- ist.

7. Verbindungen nach Anspruch 2, dadurch gekennzeichnet, dass G ein heterocyclischer organischer Rest ist.

8. Verbindungen nach Anspruch 7, dadurch gekennzeichnet, dass G ein Rest der Formel

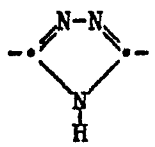 , 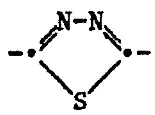 , 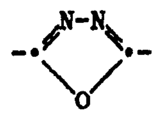 , 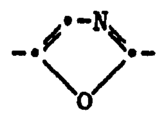 ,

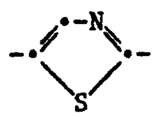 , 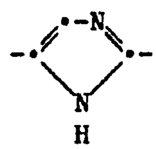 , 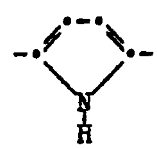 , 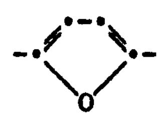 ,

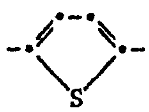 oder 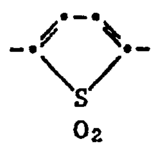 ist.

9. Verbindungen nach einem der Ansprüche 1 bis 8, dadurch gekennzeichnet, dass A ein Rest der Formel

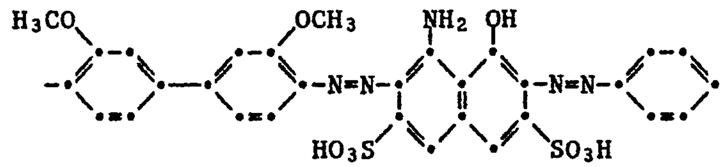

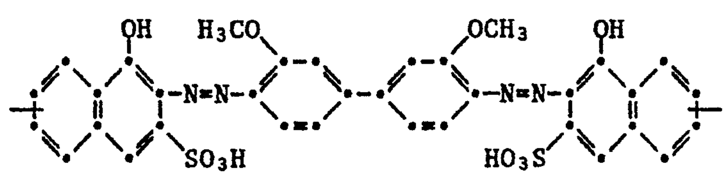 ,

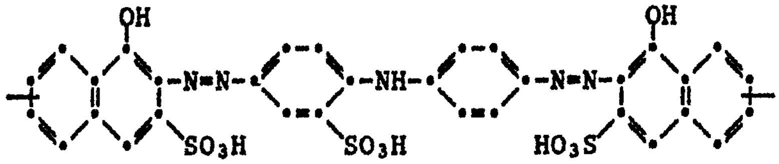

,

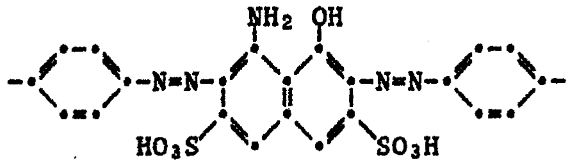

oder

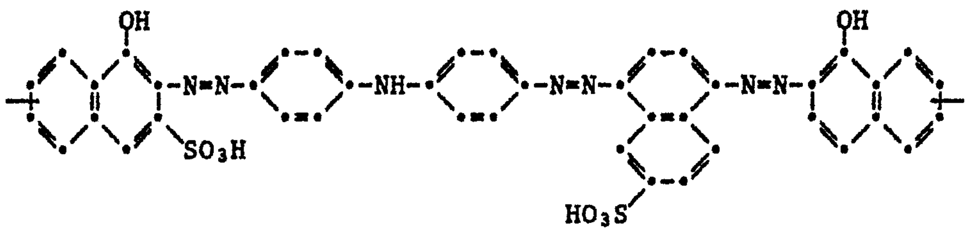

ist.

10. Verbindungen nach Anspruch 1, dadurch gekennzeichnet, dass L und L' unabhängig voneinander Alkylen mit 1 bis 4 Kohlenstoffatomen, Phenylen, Naphthylen, -O-, -S-, -NH-, $-SO_2-$, -N=N-, -CO-NH- oder

$$-\overset{O}{\overset{\|}{C}}-O-$$

sind.

11. Verbindungen nach Anspruch 10, dadurch gekennzeichnet, dass L und L' -N=N- sind.

12. Verbindungen nach Anspruch 1, dadurch gekennzeichnet, dass B und B' unabhängig voneinander Phenyl, Naphthyl, Pyridinyl, Pyrazinyl, Thiophenyl, Furanyl, Pyrrolyl, Thiazolyl, Benzophenyl, Benzthiazolyl, Benztriazolyl, Triazinyl, Chinoxalinyl, Phenylsalicyl, 2,4-Dihydroxyphenyl oder Pyronyl sind.

13. Verbindungen nach Anspruch 12, dadurch gekennzeichnet, dass B und B' unabhängig voneinander Benzophenyl, Benztriazolyl, Benzthiazolyl, Chinoxalinyl oder 2,4-Dihydroxyphenyl sind.

14. Verbindungen nach Anspruch 13, dadurch gekennzeichnet, dass B und B' unabhängig voneinander ein Rest der Formel

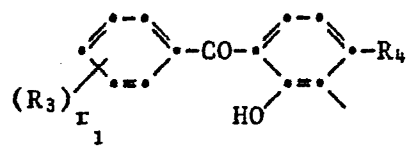 , 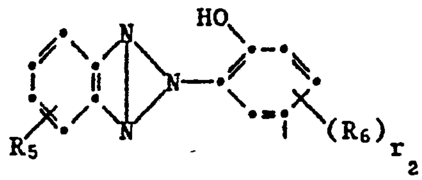 ,

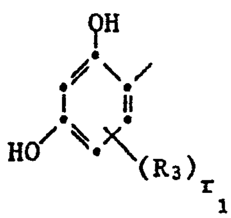 , 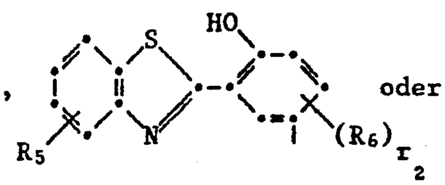 oder 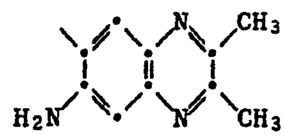

sind, worin $R_3$ Wasserstoff, Hydroxyl, Methoxy, Chlor, Fluor, Carboxyl, Sulfo, $r_1$ 1, 2 oder 3, $R_4$ Hydroxyl, Amino oder Alkoxy, Sulfoalkyloxy oder Acylamino mit je 1 bis 4 Kohlenstoffatomen, $R_5$ Wasserstoff, Chlor oder Sulfo, $R_6$ Wasserstoff, Alkyl mit 1 bis 4 Kohlenstoffatomen, Carboxyalkyl mit 1 bis 4 Kohlenstoffatomen oder Amino und $r_2$ 1 oder 2 ist.

15. Verbindungen nach Anspruch 14, dadurch gekennzeichnet, dass B und B' unabhängig voneinander ein Rest der Formel

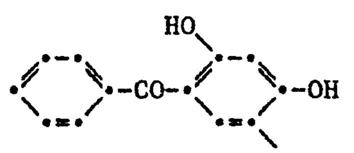 , 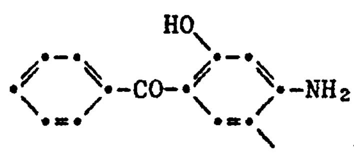 , 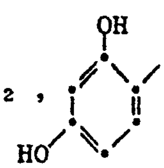 ,

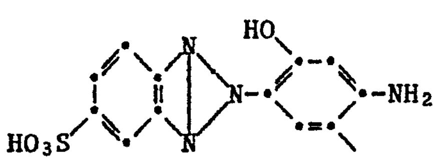 oder 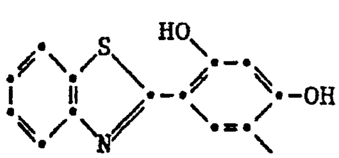

sind.

16. Verfahren zur Herstellung von Verbindungen der Formel

(1) $(B-L)_m-A-(L'-B')_n$ ,

worin A, B, m und n die in Anspruch 1 angegebenen Bedeutungen haben und L und L' jeweils eine Azogruppe enthalten, dadurch gekennzeichnet, dass man aus der Verbindung der Formel

(6) $(H_2N)_m-A-(NH_2)_n$

die entsprechende Tetrazoverbindung herstellt und diese mit der Verbindung der Formel

(7) B - H bzw. (7a) B' - H,

kuppelt.

17. Verfahren zur Herstellung von Verbindungen der Formel

(1) $(B-L)_m-A-(L'-B')_n$ ,

worin A, B, m und n die in Anspruch 1 angegebenen Bedeutungen haben, und L und L' die in Anspruch 1 angegebenen Bedeutungen mit Ausnahme von Azo haben, dadurch gekennzeichnet, dass man die Verbindungen der Formel

(8) $(H)_m-A-(H)_n$

mit der Verbindung der Formel

(9) B-L-Halogen bzw. (9a) B'-L'-Halogen
umsetzt.

18. Verwendung der Verbindungen der Formel

(1) $(B\text{-}L)_m\text{—}A\text{—}(L'\text{-}B')_n$ ,

worin A der Rest eines Bis- oder Trisazofarbstoffs ist, L und L' gleich oder voneinander verschieden sind und ein Brückenglied bedeuten, B und B' gleich oder voneinander verschieden sind und einen aromatischen Rest bedeuten, wobei mindestens einer der Reste B und B' spektrale Absorption im UV-Bereich aufweist, und m 1 oder 2 und n 0, 1 oder 2 ist, in photographischem Silberfarbbleichmaterial.

19. Verwendung der Verbindungen nach Anspruch 13 in photographischem Silberfarbbleichmaterial.

20. Verwendung der Verbindung der Formel (407) in photographischem Silberfarbbleichmaterial.

21. Photographisches Silberfarbbleichmaterial, dadurch gekennzeichnet, dass es in mindestens einer Schicht eine Verbindung der Formel

(1) $(B\text{-}L)_m\text{—}A\text{—}(L'\text{-}B')_n$ ,

worin A der Rest eines Bis- oder Trisazofarbstoffs ist, L und L' gleich oder voneinander verschieden sind und ein Brückenglied bedeuten, B und B' gleich oder voneinander verschieden sind und einen aromatischen Rest bedeuten, wobei mindestens einer der Reste B und B' spektrale Absorption im UV-Bereich aufweist, und m 1 oder 2 und n 0, 1 oder 2 ist, enthält.

22. Photographisches Silberfarbbleichmaterial nach Anspruch 21, dadurch gekennzeichnet, dass es ein monochromes Material ist.

23. Verwendung des mit dem photographischen Silberfarbbleichmaterial nach Anspruch 21 hergestellten photographischen Bildes als Vorlage bei der Belichtung von Diazotypiematerial.

FO 7.1/KH/bg*/sm*/cs*